Europäisches Patentamt

European Patent Office

Office européen des brevets

(11) Publication number: **0 363 535**
**A1**

## EUROPEAN PATENT APPLICATION

(21) Application number: **88309554.9**

(22) Date of filing: **12.10.88**

(51) Int. Cl.⁵: **C08J 9/14**

(43) Date of publication of application:
**18.04.90 Bulletin 90/16**

(84) Designated Contracting States:
**BE DE FR GB**

(71) Applicant: **THE DOW CHEMICAL COMPANY**
**2030 Dow Center Abbott Road P.O. Box 1967**
**Midland Michigan 48640-1967(US)**

(72) Inventor: **Park, Chung Poo**
**8762 Stoneridge Court**
**Pickerington Ohio 43147(US)**

(74) Representative: **Burford, Anthony Frederick et al**
**W.H. Beck, Greener & Co. 7 Stone Buildings Lincoln's Inn**
**London WC2A 3SZ(GB)**

(54) **Flexible foam having improved dimensional stability produced from intermediate density polyethylene.**

(57) Dimensionally stable flexible closed-cell foams are prepared from intermediate density, branched chain polyethylene resin having a density greater than 0.928 $g/cm^3$, preferably 0.930 to 0.933 $g/cm^3$. FC-12 and/or FC-142b can be used as blowing agents.

EP 0 363 535 A1

# FLEXIBLE FOAM HAVING IMPROVED DIMENSIONAL STABILITY PRODUCED FROM INTERMEDIATE DENSITY POLYETHYLENE

This invention relates to a process for making a dimensionally stable flexible foam article from branched chain polyethylene and to dimensionally stable polyethylene flexible foam articles.

Cellular plastics have found important uses in civilization since primitive man first made use of that ubiquitous polymer, wood. Today flexible foam articles made from polyethylene have well known applications in the packaging, construction, sports, appliance, and automotive markets. Important qualities of polyethylene flexible foams and manufacturing processes therefor, include desirable compressive strength, heat distortion temperature, dimensional stability, and cost of manufacture. Expanded (foamed) articles, as the term is used herein, are cellular polymers having a two-phase gas-solid system, in which the solid is continuous and comprises a synthetic polymer. The gas phase is usually distributed in cells within the article.

It is well known to make closed-cell ethylenic polymer resin foams by the process of extrusion foaming wherein a normally solid thermoplastic ethylenic polymer resin, such as polyethylene, is heat-plastified and mixed under pressure with a volatile material, such as 1,2-dichlorotetrafluoroethane (FC-114) to form a flowable gel which is then passed through a shaping orifice or die opening into a zone of lower pressure. Upon the release of pressure, the volatile constituent of the gel vaporizes, forming a gas-phase cellular structure in the gel which cools to a corresponding cellular foamed solid resin. Desirably, the resulting gas cells are substantially uniform in size, uniformly distributed through the foam body, and closed, i.e., separated from each other by membrane walls of resin. Although a number of general principles are thought to be understood, much of the extrusion foaming technology is empirical.

One of the common requirements of acceptable foam resin products is dimensional stability, i.e., it is desired that the linear dimension and volume of a piece of foam resin not change appreciably, either to shrink or to expand, under ordinary conditions, from the time its manufacture is complete until the time its ultimate useful life is ended. It is also desired that if any appreciable shrinking of a foam is to occur, which is usually the case with a freshly extruded foam, the foam be able to recover within a reasonable period of time to a substantially constant volume close to that of the foam measured shortly after its extrusion.

With respect to dimensional stability, it is noted that the vapors of volatile material originally present in foam cells gradually permeate the cell wall and escape from the foam over a period of time, thereby tending to reduce the inner cell pressure and tending to cause the foam to shrink during that time. However, when the foam is exposed to ambient atmosphere, air and its constituent gases also tend to permeate into the foam through the cell wall over a period of time, thereby increasing the inner cell pressure. By virtue of the possibly differing relative rates of permeation of the blowing agent out of and air into the cellular structure, there exists the potential for the development of a significant pressure differential (relative to ambient air pressure) within such cellular structure with attendant shrinking or expansion thereof during the indicated air/blowing agent interchange therein. Accordingly, the difficulties of attaining dimensional stability present a problem frequently encountered which is particularly acute in foams of relatively low density (high expansion ratio) when the resin membrane cell walls are relatively thin.

U.S. Patent 3,644,230 (Cronin) describes a process for extruding a polyolefin, such as polyethylene, using a halogenated hydrocarbon blowing agent, such as dichlorodifluoromethane (FC-12) in conjunction with a stability control agent comprising a partial ester of a fatty acid. However, the product resulting from a process as disclosed by this reference contains an undesirably high open cell content.

U.S. Patent 3,766,099 (Kawai et al.) describes a process of producing an ethylenic resin foam using as a foaming agent a mixture of dichlorodifluoromethane (FC-12) with either or both of monochloropentafluoroethane and octofluorocyclobutane. Suitable ethylenic resins are said to include low, medium, and high density polyethylenes.

U.S. Patent 4,110,269 (Ehrenfruend) describes a method of producing low density polyethylene foam from a mixture of polyethylene resin with an ionomer resin utilizing a mixture of dichlorodifluoromethane (FC-12) and dichlorotetrafluoroethane (FC-114) as the blowing agent.

It has been found that a flexible foam, produced from a low density polyethylene having a density lower than $0.928 \text{g/cm}^3$ by use of dichlorodifluoromethane (FC-12) or 1-chloro-1,1-difluoroethane (FC-142b) as the blowing agent, shrinks excessively during aging due to high permeation rates of the blowing agents in the polymer relative to air. Furthermore, high density, linear polyethylene is unsuitable for extrusion foaming since its poor melt strength results in foam collapse at the die during extrusion. Also, while 1,2-dichlorotetrafluoroethane (FC-114) is an excellent foaming agent, it is expensive and suspected of harming the earth's protective ozone layer. Use of FC-12, which is inexpensive, or FC-142b, which is believed to be ozone-acceptable, would be desirable to lower foamed article costs and/or increase environmental safety.

The present invention provides a substantially closed-cell dimensionally stable, flexible foam article and a process for making cellular material which mixes an intermediate density, branched chain polyethylene having a density greater than 0.928 $g/cm^3$ with a blowing agent and extrudes the mixture under foaming conditions effective to produce a dimensionally stable, flexible foam wherein the process is essentially free of added stability control agents. Beneficially, stable flexible cellular materials of substantially closed-cell structure having a density of from 10 to 320 kg/cubic meter (0.6 to 20 pounds per cubic foot) are produced from an intermediate density branched polyethylene having a density greater than about 0.928 $g/cm^3$.

Surprisingly, blowing agents such as, for example, dichlorodifluoromethane (FC-12) and 1-chloro-1,1-difluoroethane (FC-142b) produce dimensionally stable flexible foams from intermediate density, branch chain polyethylene without the addition of any further stabilizing agents. In general, commercially available low-density branched chain polyethylene produced by the high pressure process has a density ranging from 0.916 to 0.928 $g/cm^3$. Unexpectedly, it has been found that a group of branched chain polymers from the high pressure family having a density greater than about 0.928 behave differently. In addition to improved dimensional stability, foams produced from these intermediate density polyethylenes have improved compressive strength and heat distortion temperature. Most importantly it has now been discovered that foams containing an open cell content of less than 20 percent as determined by ASTM D-2856, Procedure A can be prepared according to the present invention.

Intermediate density, branched chain polyethylene (IDPE) may be made by one of ordinary skill in the art according to known processes, such as the high pressure process used to make low-density polyethylene using a multi-zone reactor.

The term "intermediate density, branched chain polyethylene" as used herein means branched chain polyethylene having a density of at least greater than 0.928 $g/cm^3$.

Suitable intermediate density, branched chain polyethylene will have a density greater than 0.928 $g/cm^3$. Advantageously, IDPE having a density greater than 0.930 $g/cm^3$ will be employed. Generally, the higher the density of the branched chain polyethylene employed will result in better properties such as dimensional stability, compressive strength, and heat distortion temperature. Nonetheless, IDPEs having a density of less than 0.935 $g/cm^3$ and also those having a density of less than 0.933 $g/cm^3$ may be employed. A suitable IDPE of the present invention has a density between 0.930 $g/cm^3$ and 0.933 $g/cm^3$.

In addition to IDPE alone, blends of IDPE with other polymer, copolymer or ionomer resins may be utilized as long as density of the polymer blends remains greater than 0.928 $g/cm^3$.

Suitable resins for blending include low, medium, or high density polyethylene, ethylene-propylene copolymer, ethylene/acrylic acid copolymer, ethylene-methacrylate copolymer, ethylene vinyl acetate copolymer and the like. Methods for making ethylenic polymer resins described herein above are readily known in the art. Naturally, blends of two or more of the above-noted olefin polymers can also be suitably employed in the practice of the present invention. Preferred commercially available ionomers include Surlyn™ 1605 and Surlyn™ 1702 (Surlyn is a registered trademark of E.I. DuPont de nemours Company).

The blending step may be carried out by any of the techniques known to the art. Thus the resin components, in the form of a powder or granules, may be primarily dry-blended or tumbled and subsequently melt blended. Other techniques of blending will be apparent to those skilled in the art.

The foam articles of the present invention can be conveniently prepared using conventional extrusion foaming principles, processes and equipment by heat plastifying a normally solid intermediate density polyethylene polymer resin having a density greater than 0.928 $g/cm^3$ and incorporating into such heat plastified polymer at elevated temperature and pressure a volatile blowing agent to form a flowable gel of an expandable olefin polymer composition and thereafter extruding the gel into a zone of lower pressure and temperature to form the desired substantially closed-cell olefin polymer foam.

The term "substantially closed-cell structure" as used herein means that the foamed articles thereby referred to contain less than about 20 (preferably less than about 15) percent of open cells (as determined by ASTM D-2856, Procedure A) therein. Foams having a low open cell content are desirable for their improved cushioning properties and lack of water absorption.

The volatile organic blowing agent is mixed with a starting olefin polymer resin in proportions suitable to provide the desired degree of expansion and the resulting foamed cellular product. Depending upon such variables as the starting proportion of blowing agent, the resulting foam products of the present invention will typically have densities in the range from 10 to 320 kg/cubic meter (0.6 to 20 pounds per cubic foot). Beneficially these resulting foams will have a density of from 10 to 240 $kg/m^3$ (0.6 to 15 $lbs/ft^3$). Advantageously, foams resulting in the process of the present invention will have foam densities ranging from 15 to 95 $kg/m^3$ (1.0 to 6.0 $lbs/ft^3$).

Conventional volatile organic blowing agents may suitably be employed in the present invention either alone or in conjunction with thermally decomposable gas-releasing chemical blowing agents. Preferably, volatile blowing agents are employed which have an atmospheric boiling point below the melting point of the starting resin employed. Suitable blowing agents include halogenated hydrocarbon compounds having from 1 to 4 carbon atoms e.g. dichlorodifluoromethane (FC-12), trichlorofluoromethane (FC-11), 1,2-dichlorotetrafluoroethane (FC-114), 1-chloro-1,1-difluoroethane (FC-142b), etc., as well as hydrocarbons having 3-5 carbon atoms such as propane, n-butane, isobutane, n-pentane, isopentane and neopentane. Mixtures of two or more blowing agents are also suitable employed. Beneficially, 1,2-dichlorotetrafluoroethane (FC-114) may be utilized. Advantageously, a relatively inexpensive blowing agent viz dichlorodifluoromethane (FC-12) may be used to produce a dimensionally stable flexible foam without additional use of stabilizing agents. Use of low cost FC-12 alone with IDPE produces foams having improved compressive strength at lower cost. Also, dichlorodifluoromethane may be beneficially mixed with other blowing agents such as: 1,2-dichlorotetrafluoroethane (FC-114); n-butane; isobutane; trichlorofluoromethane (FC-11); or ethyl chloride. Surprisingly, use of IDPE with FC-142b produces flexible foams having good dimensional stability, a substantially closed-cell structure, high compressive strength and a good heat distortion temperature. FC-142b is considered less harmful to the atmospheric ozone layer due to its shorter half-life, than FC-114. Previously, blowing agents such as FC-12 and FC-142b have been considered unsuitable for producing a stable foam of thick cross-section from low density branched chain polyethylene. The resultant foam of the present invention is believed to be ozone-acceptable without sacrificing foam strength and stability. Also, a foam with higher temperature resistance may be produced according to the process of the instant invention.

In practice, the amount of the aforementioned blowing agents employed in practicing the present invention will vary and will be chosen primarily to obtain the particular foam density sought to be manufactured via such process. However, as a general rule the amount of such blowing agent employed will typically be in the range of from 0.013 to 0.50 gram-mole of the blowing agent per 100 grams of the olefin polymer resin to be foamed therewith. Preferable the above range will be 0.04 to 0.30 gram-mole of blowing agent per 100 grams resin.

In addition to the hereinbefore described ingredients, there may also be employed in the practice of the present invention other ingredients or additives which conventionally find applicability in known extrusion foaming processes such as, for example, known nucleating (or cell-size controlling) agents e.g., talc, clay, mica, silica, titanium oxide, zinc oxide, calcium silicate, metallic salts of fatty acids such as barium stearate, zinc stearate, aluminum stearate, etc., wetting agents, fillers, pigments, lubricants, anti-oxidants, mixing aids, and the like.

For purposes of the present invention, dimensional stability of the foamed articles refers to changes which occur in foamed article volume, particularly in later stages of manufacture and during subsequent storage of the foamed article. The dimensional stability of the foamed articles is measured by observing the changes in volume occurring in a test specimen of the foam article as a function of time. A test specimen is obtained by quickly cutting, from the foamed article soon (e.g. within about five minutes) after its formation, a piece of foamed article and accurately measuring its overall volume, e.g., by cubic displacement of water. The initial volume of this specimen is arbitrarily selected as the benchmark volume for the subsequent dimensional stability study. The foam article specimen is exposed to air at atmospheric pressure in ordinary room temperature; its volume is remeasured from time to time and related on a volume percentage basis to the initial volume.

For purposes of the present invention, a flexible foamed article is considered to be dimensionally stable for practical purposes if the minimum volume to which the foam article shrinks is not less than about 80 (preferably not less than about 85) percent of the initial benchmark volume, and if the volume of the foamed article four weeks (preferably three weeks) after its extrusion is not less than about 80 percent of the initial volume and preferably 90 percent of the initial volume and is substantially constant thereafter under ambient atmospheric conditions. The term "dimensionally stable" in reference to the subject cellular flexible foamed articles is used here in the sense of the foregoing definitive description.

In a preferred embodiment an expanded, flexible foamed article of the invention is produced, which has a substantially closed-cell structure comprising a polyethylene containing polymer having a polymer resin precursor of intermediate density and a blowing agent, with the polymer descendent of IDPE being present in an amount sufficient to prevent a freshly prepared foam made from such composition from shrinking by more than about 20 percent from its initial foamed volume when subjected to prolonged exposure to atmospheric air pressure. Advantageously, the above-noted foamed articles will shrink less than about 15% and preferably less than about 10%.

The following examples, in which all parts and percentages are on a weight basis unless otherwise indicated, are presented as illustrative of the present invention.

Example 1

The apparatus used in this example is a 3.18 cm screw-type extruder having additional zones for mixing and cooling at the end of usual sequential zones for feeding, melting, and metering. An opening for blowing agent injection is provided on the extruder barrel between metering and mixing zones. At the end of the cooling zone, there is attached a die orifice having an opening of rectangular shape. The height of the opening is adjustable while its width is fixed at 0.635 cm.

A polyethylene resin in the form of common granules, wetted with a small amount of a wetting agent, is uniformly adhered with a predetermined amount of talcum powder. Then the mixture is fed to an extruder of 3.18 cm screw diameter through a hopper at a uniform rate of about 4.53 kgs per hour. The extruder zone temperatures are maintained at about 140°C at the feeding zone, about 180°C at the melting and metering zones, and about 150°C at the mixing zone.

A foaming agent is injected into the injection port under pressure at a predetermined rate. The foaming agent is uniformly dissolved in the polymer at the mixing zone. The temperature of the cooling zone is adjusted so that the temperatue of the gel is brought down to an optimum temperature for foam expansion. The die opening is adjusted to have a smooth foam skin. The foam body of an approximately rectangular cross-section with rounded corners is conducted away from the die opening.

Two samples, approximately 17.8 cms long, are cut at the die. Weights, volumes and dimensions of the samples are determined within 5 minutes after extrusion. After initial determination weights and volumes of the samples are periodically rechecked. A fully aged foam is used to determine physical properties. Test parameters and results are summarized in Table 1 and Table 2. Test numbers 1.1 and 1.2 are examples of the present invention, while test numbers 1.3 - 1.5 are counter-examples (not of the present invention). As can be seen from results shown in Tables 1 and 2, good quality foams having substantially closed-cell structure are produced from an intermediate density polyethylene as well as from low density polyethylenes. Foaming agents used in these examples are 1,2-dichlorotetrafluoroethane (FC-114) and 1-chloro-1,1-difluoroethane (FC-142b). Foams produced from an intermediate density polyethylene having a density of 0.9318 g/cm³ with FC-142b and FC-114 as the blowing agents show excellent dimensional stability during aging (see test number 1.1 and 1.2). In contrast, foams from low density polyethylene having densities of 0.9210 and 0.9265 g/cm³ shrink excessively during aging when blown with FC-142b (see test numbers 1.3 and 1.4).

Furthermore, other advantages of intermediate density polyethylene foam are seen in the results of compressive foam strength and heat distortion temperature measurements. Results in Tables 1 and 2 indicate that intermediate density polyethylene foam is substantially stronger than low density polyethylene foam having equivalent density. Moreover, intermediate density polyethylene foam has a 5-10°C higher heat distortion temperature. Thus, a clear distinction exists between intermediate density polyethylene and low density polyethylene with regard to these improved properties of compressive strength, heat distortion temperature, and foam dimensional stability.

TABLE 1

| Test No. | Polymer Type | M.I. (dg/min)[1] | Density (g/cc)[2] | Blowing Agent | | Talc Level (pph)[4] | Foaming Temp. (°C)[5] | Foam Thickness (cm)[6] | Foam Width (cm)[7] | Cell Size (mm)[8] | Foam Density (kg/cu meter)[9] |
|---|---|---|---|---|---|---|---|---|---|---|---|
| | | | | Type | Level (pph)[3] | | | | | | |
| 1.1 | IDPE | 2.6 | 0.9318 | FC-142b | 13.4 | 1 | 114 | 2.8 | 2.8 | 1.83 | 38.6 |
| 1.2 | IDPE | 2.6 | 0.9318 | FC-114 | 31.0 | 1 | 115 | 2.4 | 2.5 | 1.44 | 33.8 |
| *1.3 | LDPE | 2.3 | 0.9210 | FC-142b | 16.1 | 2 | 103 | 2.8 | 3.3 | 1.44 | 30.9 |
| *1.4 | LDPE | 3.0 | 0.9265 | FC-142b | 18.0 | 0.5 | 112 | 2.4 | 2.7 | 1.62 | 30.0 |
| *1.5 | LDPE | 2.3 | 0.9210 | FC-114 | 21.7 | 1 | 104 | 2.7 | 3.2 | 1.49 | 39.0 |
| Notes: | | | | | | | | | | | |

* - Not an example of this Invention
[1] - melt index of the polymer determined per ASTM D1238 Procedure A at Condition E
[2] - density of polymer granules
[3] - parts of blowing agent mixed in per hundred parts of polymer
[4] - parts of nucleator mixed in per hundred parts of polymer
[5] - temperature of polymer/blowing agent gel proceeding to foam expansion
[6] - thickness of foam body measured within five minutes after foam expansion
[7] - width of foam body measured within five minutes after foam expansion
[8] - cell size per ASTM D-3576
[9] - density of foam body measured within five minutes after foam extrusion

EP 0 363 535 A1

## TABLE 2

| Test No. | Time for Min. Vol. (day)[10] | Min. Vol.[11] | Foam Dimensional Stability (% of Initial Volume)[12] | | | | | Compressive Strength (kPa)[13] | | | Heat Distortion Temp. (°C)[14] |
|---|---|---|---|---|---|---|---|---|---|---|---|
| | | | 1 wk | 2 wk | 3 wk | 4 wk | 5 wk | 5% | 10% | 25% | |
| 1.1 | 3 | 90 | 94 | 96 | 96 | 94 | 94 | 30 | 47 | 62 | 115 |
| 1.2 | 4 | 93 | 99 | 96 | 98 | 97 | 97 | 28 | 43 | 58 | 115 |
| *1.3 | 3 | 49 | 55 | 64 | 68 | 73 | 75 | 15 | 23 | 39 | 100 |
| *1.4 | 6 | 64 | 65 | 75 | 81 | 86 | 90 | 23 | 37 | 54 | 110 |
| *1.5 | 2 | 93 | 93 | 94 | 94 | 94 | 94 | 14 | 17 | 23 | 105 |
| Notes: | | | | | | | | | | | |

\* - Not an example of this Invention

[10] - time in days from foam extrusion to the time when foam shrinkage reaches the maximum

[11] - minimum volume of foam body during aging as percentage of initial volume after indicated period from foam extrusion

[12] - volume of foam body as percentage of initial volume after indicated period from foam extrusion

[13] - average of three directional strengths at the specified deflection determined per ASTM D-3575

[14] - the highest temperature where foam shrinkage after one hour is no more than five percent in volume

### Example 2

The same apparatus and operating procedures are employed as in Example 1 unless otherwise noted. The polymers used in this example are blends of polyethylenes with an ionomer resin (Surlyn 1605) produced by DuPont. Blend results are shown in Tables 3 and 4.

As seen in Tables 3 and 4 both intermediate density polyethylene and low density polyethylene blend well with ionomer resins resulting in excellent quality foams. However, intermediate density polyethylene again shows improved characteristics of dimensional foam stability, compressive strength, and heat distortion temperature.

TABLE 3

| Test No. | Polymer Type | M.I. (dg/min)[1] | Density (g/cc)[2] | Blend Ratio (wt./wt.)[15] | Blowing Agent | | Talc Level (pph)[4] | Foaming Temp. (°C)[5] | Foam Thickness (cm)[6] | Foam Width (cm)[7] | Cell Size (mm)[8] |
|---|---|---|---|---|---|---|---|---|---|---|---|
| | | | | | Type | Level (pph)[3] | | | | | |
| 2.1 | IDPE | 2.6 | 0.9319 | 80/20 | FC-142b | 13.0 | 0.25 | 117 | 2.1 | 2.9 | 0.74 |
| *2.2 | LDPE | 2.3 | 0.9210 | 80/20 | FC-142b | 15.9 | 0.25 | 108 | 2.7 | 3.3 | 1.13 |
| Notes: | | | | | | | | | | | |

* Not an example of this Invention

[1] through [8] the same as in Table 1

[15] - the weight ratio of the polyethylene feed rate to that for Surlyn™ 1605 ionomer resin

EP 0 363 535 A1

TABLE 4

| Test No. | Foam Density (kg/cu meter)[9] | Time for Min. Vol. (day)[10] | Min. Vol.[11] | Foam Dimensional Stability (% of Initial Volume)[12] | | | | | Compressive Strength (kPa)[13] | | | Heat Distortion Temp. (°C)[14] |
|---|---|---|---|---|---|---|---|---|---|---|---|---|
| | | | | 1 wk | 2 wk | 3 wk | 4 wk | 5 wk | 5% | 10% | 25% | |
| 2.1 | 31.5 | 2 | 90 | 91 | 94 | 97 | 99 | 99 | 21 | 30 | 41 | 115 |
| *2.2 | 29.0 | 5 | 63 | 64 | 69 | 77 | 77 | 80 | 18 | 27 | 44 | 105 |
| Notes: | | | | | | | | | | | | |

* - Not an example of this Invention

[10] through 14 the same as in Tables 1 and 2

Example 3

The apparatus used in Example 3 is a conventional screw-type extruder of 8.9 cm screw diameter. The operating procedures are essentially the same as that employed in Example 1 and the extruder has essentially the same configuration as that employed in Example 1 except as hereinafter noted. The die opening is 5.7 cm in width and of variable height between 0.254 cm to 0.508 cm.

The operating procedure of the extruder is such that the polymer is fed into the extruder at a uniform rate between 91 and 136 kgs per hour in this example. A nucleating agent, 3:1 by weight mixture of talcum powder and zinc stearate, is also fed into the extruder at a predetermined rate. A foaming agent is also introduced to the extruder in the manner described in the previous examples. The foam specimens in this example are cut to about 14 cms in length for determining dimensional stability. Parameters and results are shown in Tables 5 and 6. Comparison of tests Nos. 3.1 - 3.5 of the invention and counter examples 3.6 - 3.8 (not of the present invention) show that both low density and intermediate density polyethylene make excellent quality foams with several physical blowing agents. These results further demonstrate that an intermediate density polyethylene resin is expanded to a dimensionally stable foam by FC-142b, FC-12, FC-114 or by a 50/50 mixture of FC-12/FC-114. Except for FC-114, none of these blowing agents can be used to produce a dimensionally stable foam from a low density polyethylene. Surprisingly, however, these other blowing agents may be used to produce not only a dimensionally stable foam but also a foam having higher compressive strength in the present invention.

TABLE 5

| Test No. | Polymer Type | M.I. (dg/min) | Density g/cc | Feed Rate (kg/hr) | Blowing Agent Type | Level (pph) | Nucleator Level (pph) | Foaming Temp. (°C) | Foam Thickness (cm) | Foam Width (cm) |
|---|---|---|---|---|---|---|---|---|---|---|
| | | (1) | (2) | (16) | | (3) | (4) | (5) | (6) | (7) |
| 3.1 | IDPE | 2.6 | 0.9299 | 113 | FC-142B | 13.2 | 0.96 | 115 | 3.94 | 18.4 |
| 3.2 | IDPE | 2.6 | 0.9299 | 136 | FC-142B | 16.7 | 0.73 | 115 | 3.60 | ND |
| 3.3 | IDPE | 2.6 | 0.9299 | 136 | FC-12 | 17.3 | 0.10 | 112 | 4.21 | 20.1 |
| 3.4 | IDPE | 2.6 | 0.9299 | 136 | FC-12 FC-114 50/50 | 26.9 | 0.13 | 112 | 4.24 | 18.7 |
| 3.5 | IDPE | 2.6 | 0.9299 | 136 | FC-114 | 30.1 | 0.10 | 110 | 3.84 | 19.8 |
| *3.6 | LDPE | 2.3 | 0.9210 | 91 | FC-114 | 23.0 | 0.6 | 106 | 5.18 | 17.6 |
| *3.7 | LDPE | 2.3 | 0.9210 | 91 | FC-114 | 30.0 | 0.32 | 106 | 4.47 | 17.7 |
| *3.8 | LDPE | 2.3 | 0.9210 | 91 | FC-142B | 10.9 | 0.55 | 106 | 4.85 | 16.3 |

Notes:

* - Not an example of this Invention
(1) - through (3) and (5) through (7) - the same as in Table 1
(4) - nucleator used in 3/1, by weight, moixture of tralc/zinc stearate mixed in per hundred parts of polymer
(16) - feed rate of polymer to the extrusion line
ND - not determined

TABLE 6

| Test No. | Cell Size (mm) | Foam Density (kg/cm) | Time for Min. Vol. (day) | Min. Vol. | Foam Dimensional Stability | | | | | Compressive Strength | | |
|---|---|---|---|---|---|---|---|---|---|---|---|---|
| | (8) | (9) | (10) | (11) | (12) | (12) | (12) | (12) | (12) | (13) | (13) | (13) |
| 3.1 | 1.2 | 33.3 | 7 | 90 | 90 | 91 | 91 | ND | ND | 42 | 61 | 74 |
| 3.2 | 1.3 | 28.2 | 7 | 78 | 78 | 79 | 84 | ND | ND | 36 | 52 | 70 |
| 3.3 | 1.8 | 27.2 | 14 | 84 | 85 | 84 | 84 | ND | ND | ND | ND | ND |
| 3.4 | 1.0 | 26.6 | 7 | 90 | 90 | 91 | 91 | ND | ND | 29 | 39 | 53 |
| 3.5 | 1.6 | 26.6 | 5 | 90 | 90 | 91 | ND | ND | ND | 32 | 43 | 56 |
| *3.6 | 1.2 | 34.4 | 6 | 90 | 91 | 91 | 93 | 91 | 91 | 39 | 46 | 57 |
| *3.7 | 1.2 | 27.5 | 4 | 85 | 85 | 87 | 86 | ND | ND | 12 | 24 | 39 |
| *3.8 | 1.3 | 34.9 | 15 | 59 | 66 | 59 | 62 | ND | ND | ND | ND | ND |
| NOTES: | | | | | | | | | | | | |

*not an example of this invention
(8) through (13) - the same as in Tables 1 and 2
ND - not determined

Example 4

Example 3 is repeated using blends of polyethylenes and ionomers. The process of Example 3 and equipment used are the same except as hereinafter noted. Polymers in Example 4 are extruded at a uniform rate of 91 kgs per hour. As reflected in Tables 7 and 8 which present the additional parameters and results of Example 4, it is shown that blends of an intermediate density polyethylene with SurlynTM 1702 or 1605 produce dimensionally stable foam with FC-142b as the blowing agent. In comparison counter-Example 4.4 shows that a foam produced from a blend of a low density polyethylene with SurlynTM 1702 with the same blowing agent is unacceptably unstable.

EP 0 363 535 A1

TABLE 7

| Test No. | Polymer Type | M.I. (dg/min) | Density g/cc | Surlyn™ type | Blend Ratio (wt./wt.) | Blowing Agent | | Nucleator Level (pph) | Foaming Temp. (°C) | Foam Thickness (cm) | Foam Width (cm) |
|---|---|---|---|---|---|---|---|---|---|---|---|
| | | | | | | Type | Level (pph) | | | | |
| | | (1) | (2) | (16) | (15) | | (3) | (4) | (5) | (6) | (7) |
| 4.1 | IDPE | 2.6 | 0.9319 | 1702 | 70/30 | FC-142b | 13.4 | 0.48 | 111 | 5.18 | ND |
| 4.2 | IDPE | 2.6 | 0.9319 | 1702 | 60/40 | FC-142b | 17.2 | 0.48 | 111 | 4.67 | 17.4 |
| 4.3 | IDPE | 2.6 | 0.9319 | 1605 | 70/30 | FC-142b | 14.4 | 0.026 | 109 | 5.0 | ND |
| *4.4 | LDPE | 2.3 | 0.9319 | 1702 | 60/40 | FC-142b | 13.2 | 0.65 | 106 | 4.57 | 16.9 |
| Notes: | | | | | | | | | | | |

* - Not an example of this invention

(1) through (7) the same as in Table 5

(17) - type of Surlyn™ resin mixed with the intermediate densities polyethylene

(15) - the weight ratio of the polyethylene feed rate to that of the indicated Surlyn™ ionomer resin

ND - not determined

TABLE 8

| Test No. | Cell Size (mm) | Foam Density (kg/cubic meter | Time for Min. Vol. (day) | Min. Vol. | Foam Dimensinal Stability (% of Initial Volume) | | | |
|---|---|---|---|---|---|---|---|---|
| | | | | | 1 wk | 2 wk | 3 wk | 5 wk |
| | (8) | (9) | (10) | (11) | (12) | (12) | (12) | (12) |
| 4.1 | 0.9 | 30.9 | 3 | 90 | 91 | 91 | 92 | ND |
| 4.2 | 0.9 | 26.1 | 4 | 92 | 94 | 94 | 94 | ND |
| 4.3 | 1.0 | 27.5 | 15 | 87 | 90 | 87 | 83 | 92 |
| * 4.4 | 1.4 | 27.4 | >18 | <74 | 76 | 75 | 74 | ND |
| Notes: | | | | | | | | |

* - Not an example of this Invention
(1) through (7) the same as in Table 5
(17) - type of SurlynTM resin mixed with the intermediate densities polyethylene
(15) - the weight ratio of the polyethylene feed rate to that of the indicated SurlynTM ionomer resin
ND - not determined

Example 5

An intermediate density polyethylene resin prepared by the high pressure free radical process and having a branched structure, a melt index of 2.5 dg/min and a density of 0.930 g/cc (IDPE) and two medium density polyethylene resins, MDPE-A, having a melt index of 1.0 dg/min and a density of 0.930 g/cc and MDPE-B, having a melt index of 1.0 dg/min and a density of 0.935 g/cc prepared by the low pressure Ziegler Natta catalytic process and having a linear structure were tested in the preparation of suitable foam products.

The extruder used in the example was a 2.54 cm (1 inch) screw type extruder having additional zones for mixing and cooling the resin after the usual sequential zones of feeding, melting and mixing. A port for blowing agent addition was provided on the extruder barrel between the metering and mixing zones. At the end of cooling zone, there was attached a die orifice having an opening of rectangular shape. The height of the opening (hereinafter called die gap) was adjustable, its width was fixed at 3.68 mm (0.145 in).

The granules of polyethylene were coated with a small amount of talc (0.25 percent by weight) for cell size control and fed into the extruder at a uniform rate of 2.3 Kg (5 pounds) per hour. The temperatures maintained in the extruder zones were varied for the different resins to provide optimum extrusion conditions as shown in Table 9. A predetermined amount of blowing agent was injected under pressure into the mixing zone in order to provide approximately 0.15 percent blowing agent based on polymer weight for all samples. The temperature of the cooling zone was maintained so that the polymer/blowing agent could reach an optimum foaming temperature which was unique to each foaming mixture depending on the melting point of the resin employed. The overall temperature profiles were as follows:

TABLE 9

| Resin Type | Feeding Zone (°C) | Melting Zone (°C) | Metering Zone (°C) | Mixing Zone (°C) | Foaming Gel Temp. (°C) |
|---|---|---|---|---|---|
| IDPE | 95 | 150 | 180 | 200 | 107-109 |
| MDPE A | 100 | 158 | 189 | 218 | 120-121 |
| MDPE B | 100 | 158 | 189 | 218 | 124-125 |

When the extruder reached a steady state condition, the die gap was adjusted to the threshold die gap, ie. the largest die height attainable before foaming of the mixture before exiting the die occurred. A sample of the foam prepared utilizing this die gap was utilized for measurement of foam properties.

The results of the above testing showed that only foams made from IDPE attained an open cell content of less than 20 percent. Complete test results are contained in Table 10.

## TABLE 10

| Run | Polymer Feed[1] | Blowing Agent[2] | Mole Ratio[3] | Die Gap[4] | Foam Cross-Section[5] | Foam Density[6] | Cell Size[7] | % Open Cell[8] | Foam Appearance[9] |
|---|---|---|---|---|---|---|---|---|---|
| 5.01 | IDPE | CFC-142b | - | 1.3 | 1.1 | 37 | 1.0 | 3 | G |
| 5.02 | IDPE | CFC-12 | - | 1.0 | 0.9 | 43 | 0.85 | 7 | G |
| 5.03 | IDPE | CFC-114 | - | 1.1 | 1.0 | 36 | 0.56 | 7 | G |
| 5.04 | IDPE | CFC-142b/ CFC-114 | 3/2 | 1.3 | 1.0 | 40 | 0.52 | 4 | G |
| 5.05 | IDPE | CFC-142b/ EtCl | 4/1 | 1.3 | 0.9 | 41 | 0.56 | 7 | G |
| 5.06* | MDPE A | CFC-142b | - | 1.3 | 0.4 | 41 | 0.17 | 32 | V |
| 5.07* | MDPE A | CFC-12 | - | 1.3 | 0.4 | 50 | 0.19 | 41 | V,PC |
| 5.08* | MDPE A | CFC-114 | - | 1.3 | 0.3 | 50 | 0.10 | 57 | V,PC |
| 5.09* | MDPE A | CFC-142b/ CFC-114 | 3/2 | 1.3 | 0.4 | 41 | 0.16 | 60 | V |
| 5.10* | MDPE A | CFC-142b/ EtCl | 4/1 | 1.3 | 0.4 | 108 | 0.20 | 69 | V,PC |
| 5.11* | MDPE B | CFC-142b | - | 1.3 | 0.5 | 39 | 0.13 | 27 | V |
| 5.12* | MDPE B | CFC-12 | - | 1.3 | 0.4 | 42 | 0.20 | 34 | V |

EP 0 363 535 A1

## TABLE 10 CONTINUED

\* Comparative

(1) IDPE = intermediate density branched polyethylene having 0.930 g/cc density and 2.5 melt index.
MDPE A = medium density linear polyethylene having 0.930 g/cc density and 1.0 melt index.
MDPE B = medium density linear polyethylene having 0.935 g/cc density and 1.0 melt index.

(2) CFC-142b = 1-chloro-1,1-difluoroethane, CFC-12 = dichlorodifluoromethane,
CFC-114 = 1,2-dichlorotetrafluoroethane, EtCl = ethyl chloride.

(3) Molar ratio.

(4) Maximum width of die to avoid foaming prior to die (mm).

(5) Maximum achievable foam cross-section area in square centimeters.

(6) Density of foam body in kilograms per cubic meter measured about 30 seconds after extrusion.

(7) Cell size in millimeters measured per ASTM D-3576.

(8) Percent open cells determined per ASTM D-2856-A.

(9) Visual observation of foam appearance: G=Good, V = contained voids in the foam body, PC = foam collapsed partially at the exit of the die.

Example 6

In a further test the reaction conditions of Example 5 were substantially repeated employing an IDPE resin also containing stearamide, stearyl stearamide or glycerol monostearate in amounts of approximately 1 percent by weight. The foam products prepared were found to possess dimensional stability and had an open cell content less than 20 percent when measured according to test method ASTM D- 2856-A. Comparative foams prepared under substantially the same conditions employing a medium density polyethylene resin having a melt index of 1.0 dg/min and a density of 0.930 (MDPE-A) were found to be dimensionally stable but had an open cell content as determined by ASTM D-2856-A of 77 percent for the sample employing stearamide, 76 percent for the sample employing stearyl stearamide and 79 percent for the sample employing glycerol monostearate.

## Claims

1. A process for making cellular material comprising a branched chain high pressure polyethylene with a volatile, organic blowing agent and extruding the mixture, characterised in that the polyethylene has a density greater than 0.928 g/cm$^3$.

2. a process as claimed in Claim 1, wherein the said cellular material contains less than 20 percent open cell structure as determined by ASTM-D-2856.

3. A process as claimed in Claim 1 or Claim 2, wherein the polyethylene has a density greater than 0.930 g/cm$^3$.

4. A process as claimed in any one of the preceding claims, wherein the density of the polyethylene is less than 0.935 g/cm$^3$.

5. A process as claimed in Claim 4, wherein the density is less than 0.933 g/cm$^3$.

6. A process as claimed in any one of the preceding claims, wherein the blowing agent comprises a halogenated hydrocarbon having from 1 to 4 carbon atoms or mixtures thereof.

7. A process as claimed in any one of the preceding claims, wherein the blowing agent comprises dichlorodifluoromethane, 1,2-dichlorotetrafluoroethane, 1-chloro-1,1-difluoroethane, trichlorofluoromethane, n-butane, isobutane, n-pentane, isopentane, neopentane, ethyl chloride or mixtures thereof.

8. A process as claimed in Claim 7, wherein the blowing agent consists essentially of dichlorodifluoromethane or 1-chloro-1,1-difluoroethane or a mixture thereof.

9. A process as claimed in any one of the preceding claims, wherein low density polyethylene resin is added to the intermediate density polyethylene resin prior to extrusion.

10. An expanded, dimensionally stable flexible foam article containing less than 20 percent open cell structure as determined by ASTM-D-2856 comprising a branched chain polyethylene polymer, characterised in that said polyethylene has a density of 0.928 to 0.935 g/cm$^3$.

11. An article as claimed in Claim 10, wherein the said density is 0.930 to 0.933 g/cm$^3$.

12. An article as claimed in Claim 10 or Claim 11 having a foam density of from 10 to 240 kg/m$^3$.

13. An article as claimed in Claim 12, wherein the foam density is 15 to 95 kg/m$^3$.

18

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | EP-A-0 016 348 (DOW)<br>* Claims; page 3, paragraph 4; page 4, paragraph 5 - page 5, paragraph 2 * | 1,2,4-8<br>,10-13 | C 08 J 9/14 |
| X,Y | EP-A-0 055 460 (ASAHI-DOW LTD)<br>* Claims 1,2,6,7; page 4, lines 1-16; page 6, lines 4-24; page 11, lines 11-24; page 15, lines 28-30 * | 1,2,4,5<br>,6-8,10<br>-13 | |
| X | GB-A-1 427 522 (I.C.I. LTD)<br>* Claim 1; page 2, lines 12-15; page 3, lines 29-46 * | 1,3-5,6<br>-8 | |
| X,Y | GB-A-1 595 106 (HOECHST HOLLAND N.V.)<br>* Claims 1,16,33; page 1, lines 70-75; example III * | 1,4-7,<br>10,11 | |
| Y | GB-A-1 552 435 (I.C.I. LTD)<br>* Claims 1,11; page 1, lines 7-9; page 4, lines 24-32 * | 1,3,5-7<br>,10,11 | TECHNICAL FIELDS SEARCHED (Int. Cl.5) |
| D,Y | US-A-3 766 099 (ISAMU KAWAI et al.)<br>* Claim 1; column 3, lines 1-10,51-65 * | 1,6,7 | C 08 J |

The present search report has been drawn up for all claims

| Place of search | Date of completion of the search | Examiner |
|---|---|---|
| THE HAGUE | 20-06-1989 | DERAEDT G. |